# EUROPÄISCHE PATENTANMELDUNG

(11) **EP 1 361 620 A1**
(43) Veröffentlichungstag der Anmeldung: **12.11.2003**
(21) Anmeldenummer: 02010338.8
(22) Anmeldetag: 07.05.2002
(51) Int. Cl.: H01M 8/04

(54) **Verfahren zur Ermittlung eines Gaslecks in einer PEM-Brennstoffzelle**

(71) Anmelder: SIEMENS AKTIENGESELLSCHAFT, 80333 München (DE)
(72) Erfinder: Coerlin, Detlev, 91056 Erlangen (DE); Gellert, Harry, 91090 Effeltich (DE); Stühler, Walter, 96114 Hirschaid (DE)

(57) **Zusammenfassung**

Zur Ermittlung eines Gaslecks zwischen dem Anodengasraum und dem Kathodengasraum einer PEM-Brennstoffzelle (2) werden folgende Verfahrensschritte durchgeführt:
a) Aufladen der Brennstoffzelle (2) mit einem Gleichstrom,
b) Messen des zeitlichen Verlaufs der elektrischen Spannung an der Brennstoffzelle (2).

Damit ist mit geringem apparativem Aufwand ein Lecktest an einem Brennstoffzellenstack (1) ermöglicht, der sehr empfindlich auch bei kleinsten Lecks anspricht, zugleich jedoch auch bei großen Lecks anwendbar ist, und die genaue Position schadhafter Brennstoffzellen (2) innerhalb des Brennstoffzellenstacks (1) anzeigt.

## Beschreibung

Die Erfindung betrifft ein Verfahren zur Ermittlung eines Gaslecks zwischen dem Anodengasraum und dem Kathodengasraum einer PEM-Brennstoffzelle.

Eine PEM-Brennstoffzelle (PEM = Polymer-Electrolyt-Membran) weist als Elektrolyt eine ionenleitfähige Polymermembran auf. Beidseitig der Membran ist auf der Anoden- und auf der Kathodenseite jeweils ein gasdurchlässiger, poröser, elektrisch leitfähiger Kollektor angeordnet, wobei sich zwischen Kollektor und Membran jeweils ein Katalysator in fein verteilter Form befindet. Beim Betrieb der Brennstoffzelle wird die Anodenseite mit Brenngas, insbesondere Wasserstoff oder ein wasserstoffhaltiges Gas, und die Kathodenseite mit einem Oxidans-, insbesondere Sauerstoff oder ein sauerstoffhaltiges Gas wie Luft, versorgt. Der Wasserstoff an der Anode der Membran wird oxidiert, wobei die entstehenden Protonen durch die Membran zur Sauerstoffseite diffundieren. Diese Protonen rekombinieren an der Kathode mit reduziertem Sauerstoff zu Wasser.

Eine Leckage in der Membran der PEM-Brennstoffzelle kann zu einem so genannten Gaskurzschluss führen, wobei Wasserstoff und/oder Sauerstoff zum jeweils gegenüberliegenden Gasraum gelangt und dort am Katalysator in einer exothermen Reaktion reagiert. Durch ein solches Leck wird zum einen die elektrische Leistung der Brennstoffzelle herabgesetzt, zum anderen besteht, insbesondere bei einem größeren Leck, das Risiko der Entstehung eines Brandes in der Brennstoffzelle. Dem Test der Brennstoffzellenmembran auf Dichtheit kommt daher große Bedeutung zu. Als einfaches Lecktestverfahren wird häufig ein Druckhaltetest durchgeführt. Mit diesem Test sind größere Leckagen erkennbar. Üblicherweise sind mehrere Brennstoffzellen zu einer Brennstoffzellenbatterie oder einem Brennstoffzellenstack zusammengefasst. Der Druckhaltetest hat den Nachteil, dass ein mit diesem festgestelltes Leck in einem Brennstoffzellenstack zumindest nicht auf einfache Weise einer einzelnen Brennstoffzelle in dem Stack zugeordnet werden kann. Zudem ist die Sensitivität des Druckhaltetests auf relativ große Lecks begrenzt.

Ein weiteres Verfahren zur Ermittlung von Gaslecks in Brennstoffzellen ist beispielsweise aus der DE 196 49 434 C1 bekannt. Hierbei wird in beiden Gasräumen einer PEM-Brennstoffzelle ein unterschiedlicher Wasserstoff-Partialdruck eingestellt und der zeitliche Verlauf der Zellspannung gemessen. Die Absolutdrücke im Anoden- und Kathodengasraum sollten hierbei möglichst unterschiedlich groß sein, wobei eine Differenz von ca. 1 bar als zweckmäßig angegeben ist. Ungeschädigte Membranen sollen der dadurch verursachten Belastung ohne Risiko widerstehen. Die Anwendung des Tests bei einer vorgeschädigten Membran stellt dagegen ein Sicherheitsrisiko dar. Aus diesem Grund sollte dem Test ein herkömmlicher Druckhaltetest vorgeschaltet sein.

Der Erfindung liegt die Aufgabe zugrunde, ein einfaches und zuverlässiges Verfahren zur Ermittlung eines Gaslecks zwischen dem Anodengasraum und dem Kathodengasraum einer PEM-Brennstoffzelle anzugeben.

Diese Aufgabe wird erfindungsgemäß gelöst durch ein Verfahren mit den Ansprüchen des Merkmals 1. Hierbei wird eine Brennstoffzelle mit einem Gleichstrom aufgeladen. Dabei wird der zeitliche Verlauf der elektrischen Spannung an der Brennstoffzelle gemessen. Während des Aufladevorgangs werden, da die PEM-Zelle eine Feuchte aufweist, Elektrolysevorgänge in Gang gesetzt. Die Zellspannung steigt dabei allmählich auf einen Maximalwert an. Sofern die Zelle ein Leck aufweist, reagieren Wasserstoff und Sauerstoff auf dem Wege eines Gaskurzschlusses und wirken damit dem Anstieg der Zellspannung entgegen. Das Lecktestverfahren mittels elektrischem Aufladen der Brennstoffzelle ist sowohl bei einer neuen PEM-Brennstoffzelle vor deren Inbetriebnahme als auch in einer Stillstandsphase des Brennstoffzellenbetriebs anwendbar. In jedem Fall muss in die Zelle vor Beginn des Verfahrens ausreichend befeuchtet sein. Mit Hilfe des Verfahrens ist die Position einer schadhaften Brennstoffzelle innerhalb eines Brennstoffzellenstacks problemlos feststellbar. Hierzu ist es lediglich erforderlich, die Spannung an den einzelnen Zellen innerhalb des Stacks einzeln zu messen.

Während des Aufladevorgangs beträgt die Stromdichte, bezogen auf die Brennstoffzellenmembran, vorzugsweise 1 bis 10 Milliampere pro Quadratzentimeter. Auf diese Weise ist eine rasche Durchführbarkeit des Verfahrens gegeben. Gleichzeitig ist eine Schädigung der Brennstoffzelle während des Tests ausgeschlossen und eine ausreichend hohe Messempfindlichkeit erreichbar.

Die an die Brennstoffzelle während des Aufladevorgangs angelegte Spannung beträgt vorzugsweise 0,5 Volt bis 2 Volt, insbesondere mindestens 0,8 V und maximal 1,5 V. Die Aufladespannung entspricht damit etwa der Brennstoffzellenspannung, d.h. der Spannung, die eine fehlerfreie Brennstoffzelle im regulären Energieversorgungsbetrieb liefert.

Nach einer bevorzugten Weiterbildung wird das Verfahren zur Ermittlung eines Gaslecks einer PEM-Brennstoffzelle durch folgende weitere Verfahrensschritte ergänzt:
- Die Aufladung der Brennstoffzelle mit Gleichstrom wird beendet,
- die Brennstoffzelle wird über einen Entladewiderstand entladen,
- der zeitliche Verlauf des Spannungsabfalls an der Brennstoffzelle während des Entladevorgangs wird gemessen.

Durch diese Messung der Zellspannung während des Entladevorgangs sind eventuelle Leckagen mit erhöhter Genauigkeit nochmals verifizierbar. Die Detektion geschädigter Zellen durch Messung der Zellspannung beim Entladevorgang ist insbesondere bei gering geschädigten Zellen vorteilhaft.

Der Vorteil der Erfindung liegt insbesondere darin, dass mit geringem apparativem Aufwand ein Lecktest an einem Brennstoffzellenstack ermöglicht ist, der sehr empfindlich auch bei kleinsten Lecks anspricht, zugleich jedoch auch bei großen Lecks anwendbar ist, und die genaue Position schadhafter Zellen innerhalb des Brennstoffzellenstacks anzeigt.

Nachfolgend wird ein Ausführungsbeispiel der Erfindung anhand einer Zeichnung näher erläutert. Hierin zeigen:
- FIG 1: schematisch ein Schaltbild einer Vorrichtung zur Durchführung eines Brennstoffzellen-Lecktestverfahrens,
- FIG 2a,b: den zeitlichen Verlauf des Spannungsanstiegs bzw. - abfalls beim Brennstoffzellenlecktestverfahren mit einer Vorrichtung nach FIG 1.

Einander entsprechende Teile und Parameter sind in beiden Figuren mit den gleichen Bezugszeichen gekennzeichnet.

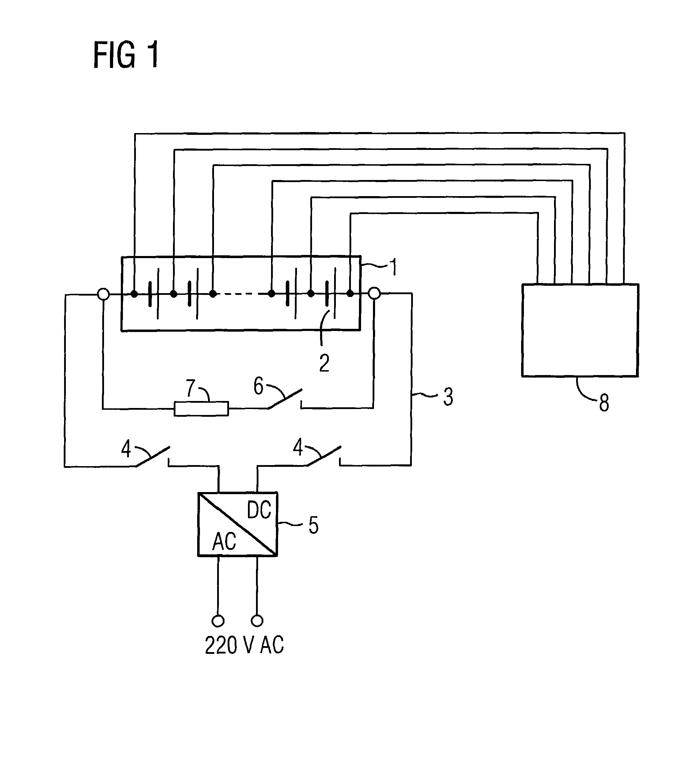

FIG 1 zeigt einen Brennstoffzellenstack oder eine Brennstoffzellenbatterie 1 mit einer Anzahl einzelner PEM-Brennstoffzellen 2. An den Brennstoffzellenstack 1 ist über Zuleitungen 3 und zwei Schalter 4 ein regelbares Netzteil oder eine Gleichspannungsquelle 5 angeschlossen. Des Weiteren ist an den Brennstoffzellenstack 1 ein über einen Schalter 6 schaltbarer Entladewiderstand 7 angeschlossen. Zur Durchführung der Zellspannungsmessungen ist ein Spannungsmessgerät 8 vorgesehen, welches mit sämtlichen PEM-Brennstoffzellen 2 einzeln verbunden ist.

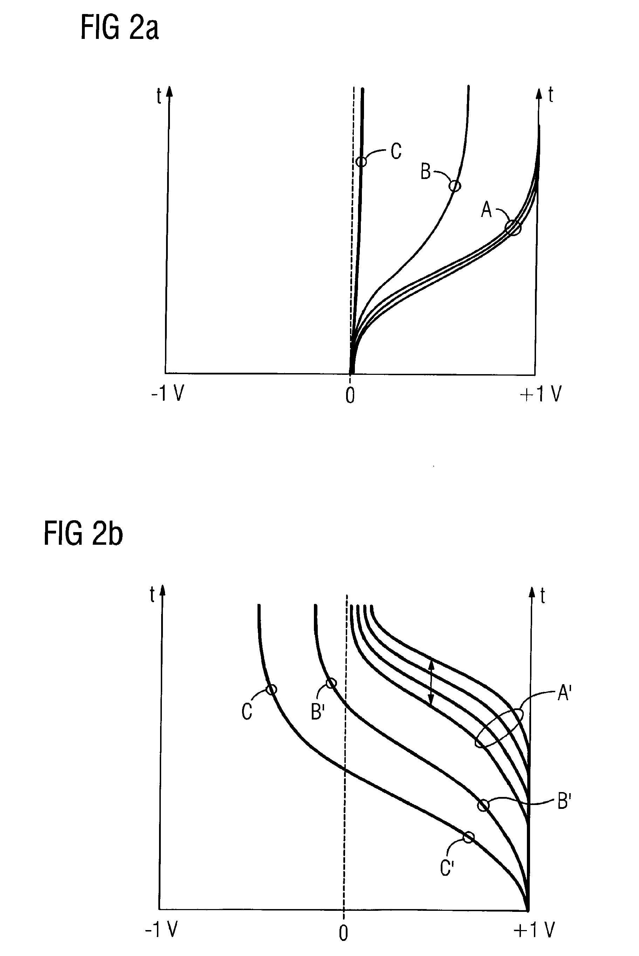

Die Durchführung des Lecktestverfahrens wird insbesondere anhand der FIG 2a,b verdeutlicht. Die Gasräume der einzelnen PEM-Brennstoffzellen 2 weisen vor Beginn des Lecktestverfahrens sowohl anoden- als auch kathodenseitig eine Feuchtigkeit, d.h. einen Wassergehalt auf. Die Brennstoffzellen 2 sind hierbei jedoch nicht mit Wasser überflutet. Bei Beginn des Lecktestverfahrens wird durch den Brennstoffzellenstack 1 ein Gleichstrom derart geleitet, dass die Stromdichte, bezogen auf die Brennstoffzellenmembranen, ca. 1 bis 10 Milliampere pro Quadratzentimeter beträgt. Unter der Voraussetzung, dass sämtliche PEM-Brennstoffzellen 2 intakt sind, liegt an jeder dieser Zellen während des Aufladevorgangs die gleiche Spannung an. Die Aufladespannung wird derart gewählt, dass, sofern die einzelnen PEM-Brennstoffzellen 2 intakt sind, nach Beendigung des Aufladevorgangs an jeder Zelle eine Spannung von 1 Volt anliegt. Durch den Aufladevorgang werden in den PEM-Brennstoffzellen 2 Elektrolysevorgänge ausgelöst, d.h. aus den zumindest geringen Mengen an Wasser in den Zellen 2 wird Wasserstoff und Sauerstoff gebildet. Damit läuft während des Aufladevorgangs die umgekehrte Reaktion derjenigen chemischen Reaktion ab, die während des regulären Brennstoffzellenbetriebs, d.h. während der Spannungsversorgung durch die Brennstoffzellen 2 abläuft.

Während des Aufladevorgangs wird dem Brennstoffzellenstack 1 kein Gas zugeführt. Die Elektrolysevorgänge während des Aufladevorgangs bewirken, dass nach dem Aufladevorgang der Brennstoffzellenstack 1 zumindest kurzzeitig als Energiequelle betreibbar ist. Hierfür sind die geringen, in den Anoden- und Kathodengasräumen der einzelnen PEM-Brennstoffzellen 2 gebildeten Mengen an Wasserstoff- und Sauerstoffgas ausreichend. Die damit erzeugte nutzbare Spannung steigt während des Aufladevorgangs bei intakten PEM-Brennstoffzellen 2 auf 1 Volt an. Weist eine PEM-Brennstoffzelle 2 jedoch ein Leck auf, so reagieren der in dieser Zelle gebildete Wasserstoff und Sauerstoff direkt, d.h. unter Herstellung eines Gaskurzschlusses, miteinander, so dass der Aufbau der nutzbaren Spannung in der PEM-Brennstoffzelle 2 verzögert wird. Durch den laufenden Gaskurzschluss wird schließlich nicht die bei intakten Zellen messbare Spannung von 1 Volt erreicht, sondern lediglich eine geringere Spannung, deren Höhe von der Größe des Lecks in der Membran der PEM-Brennstoffzelle 2 abhängt.

In dem in FIG 2a dargestellten Diagramm kennzeichnen die verschiedenen Messkurven A,B,C unterschiedliche Brennstoffzellen 2, welche folgende Eigenschaften aufweisen:
A: Es handelt sich um drei intakte Brennstoffzellen 2. Die geringfügigen Unterschiede zwischen den einzelnen gemessenen Brennstoffzellen 2 sind insbesondere darauf zurückzuführen, dass die Brennstoffzellenmembranen eine geringfügige Gasdiffusion ermöglichen, wobei die Diffusionsraten geringfügig streuen.
B: Die Brennstoffzelle 2 ist aufladbar, jedoch deutlich langsamer als eine intakte Zelle und nicht auf die volle Zellspannung von 1V. Die Zelle weist ein relativ kleines Leck auf. Im Anoden- und/oder Kathodengasraum während des Elektrolysevorgangs gebildetes Gas tritt teilweise in den jeweils anderen Gasraum über.
C: Die Brennstoffzelle 2 ist nahezu nicht aufladbar. Hieraus ist zu schließen, dass die Brennstoffzelle 2 ein relativ großes Leck aufweist. Nahezu der gesamte in der Brennstoffzelle 2 gebildete Wasserstoff und Sauerstoff reagiert bereits kurzzeitig nach der Bildung zu Wasser. Da der Elektrolysevorgang langsam abläuft, ist diese exotherme Bildung von Wasser jedoch sicherheitstechnisch unkritisch.

Die Position der defekten Brennstoffzellen 2 innerhalb des Brennstoffzellenstacks 1 ist anhand des Aufladeverhaltens der Zellen problemlos feststellbar. Das Lecktestverfahren ist auch bereits während der Montage des Brennstoffzellenstacks 1, vor dessen Fertigstellung, durchführbar.

FIG 2b veranschaulicht den Lecktest über das Entladeverhalten der Brennstoffzellen 2. Hierbei wird davon ausgegangen, dass sämtliche mit diesem Verfahren getesteten Brennstoffzellen 2 entweder intakt sind oder zumindest ein derart kleines Leck aufweisen, dass diese bis zur Spannung von 1V aufladbar sind. Nach der Aufladung der zu testenden Brennstoffzellen 2 auf 1V werden diese über einen Entladewiderstand 7 (FIG 1) entladen. Das Entladeverhalten ist in einer Kurvenschar A' für vier Brennstoffzellen 2 sowie in zwei Messkurven B', C' für jeweils eine einzige Brennstoffzelle 2 dargestellt:
A': Die Zellspannung fällt allmählich auf 0V ab. Dabei wird der während der vorausgegangenen Aufladung in den Brennstoffzellen 2 angesammelte Energieinhalt verbraucht. Obwohl sämtliche Brennstoffzellen 2, deren Entladeverhalten in der Messkurvenschar A' dargestellt ist, intakt sind, weist die Kurvenschar A', wie durch einen Doppelpfeil verdeutlicht ist, eine relativ große Streubreite auf. Dies verdeutlicht die sehr hohe Sensitivität dieses Tests.
B': Die Spannung an der Brennstoffzelle 2 fällt vergleichsweise schnell auf 0V ab. Hierbei wirkt die Zelle als Energielieferant. Der Energievorrat der Brennstoffzelle 2 ist jedoch schneller aufgebraucht als im Fall einer intakten Zelle. Die Brennstoffzelle 2 weist ein sehr kleines Leck auf. Sobald der Energievorrat der Brennstoffzelle 2 aufgebraucht ist, wechselt die an der Zelle gemessene Spannung das Vorzeichen, d.h. die Brennstoffzelle 2 wirkt ab diesem Zeitpunkt als ohmscher Widerstand. Die Energieversorgung erfolgt dabei durch die intakten Zellen innerhalb des Brennstoffzellenstacks 1.
C': Das Entladeverhalten der Brennstoffzelle 2 ist dem in der Messkurve B' dargestellten ähnlich, jedoch weist die Brennstoffzelle 2 ein etwas größeres Leck auf.

Im Ausführungsbeispiel wird die Spannung zur Aufladung der Brennstoffzellen 2 an den gesamten Brennstoffzellenstack 1 angelegt. Ebenso ist es jedoch möglich, eine Aufladespannung gezielt an eine einzelne Brennstoffzelle 2 innerhalb des Brennstoffzellenstacks 1 anzulegen. Ebenso kann auch das Entladeverhalten einer einzelnen Brennstoffzelle 2 getestet werden, indem diese allein über einen Entladewiderstand entladen wird. In diesem Fall ist, auch bei einer schadhaften Brennstoffzelle 2, ein Spannungsabfall lediglich bis 0V messbar.

## Patentansprüche

1. Verfahren zur Ermittlung eines Gaslecks zwischen dem Anodengasraum und dem Kathodengasraum einer PEM-Brennstoffzelle (2), **gekennzeichnet durch** folgende Verfahrensschritte:
a) Aufladen der Brennstoffzelle (2) mit einem Gleichstrom,
b) Messen des zeitlichen Verlaufs der elektrischen Spannung an der Brennstoffzelle (2).

2. Verfahren nach Anspruch 1, **gekennzeichnet durch** eine Stromdichte beim Aufladevorgang von 1 bis 10 Milliampere pro Quadratzentimeter in der PEM-Brennstoffzelle (2).

3. Verfahren nach Anspruch 1 oder 2, **gekennzeichnet durch** eine an die PEM-Brennstoffzelle (2) beim Aufladevorgang angelegte Spannung von 0,5 bis 2 Volt.

4. Verfahren nach einem der Ansprüche 1 bis 3, **gekennzeichnet durch** folgende weitere Verfahrensschritte:
c) Beendigung der Aufladung mit Gleichstrom,
d) Entladung der PEM-Brennstoffzelle (2) über einen Entladewiderstand (7),
e) Messung des zeitlichen Verlaufs des Spannungsabfalls an der PEM-Brennstoffzelle (2).

5. Vorrichtung zur Durchführung eines Verfahrens nach einem der Ansprüche 1 bis 4 mit einer an eine PEM-Brennstoffzelle (2) anschließbaren Gleichspannungsquelle (5) und einem an die PEM-Brennstoffzelle (2) anschließbaren Spannungsmessgerät (8).
